# EUROPEAN PATENT APPLICATION

(11) **EP 1 739 537 A1**
(43) Date of publication of application: **03.01.2007**
(21) Application number: 06010584.8
(22) Date of filing: 23.05.2006
(51) Int. Cl.: G06F 3/12

(54) **Approach for collecting and reporting status data from network devices**

(30) Priority: 29.06.2005 US 172558
(71) Applicant: Ricoh Company, Ltd., Tokyo 143-8555 (JP)
(72) Inventor: Nuggehalli, Jayasimha, Cupertino California 95014-5924 (US); Mirza-Baig, Attaullah, Cupertino California 95014-5924 (US)
(74) Representative: Schwabe - Sandmair - Marx

(57) **Abstract**

An approach is provided for collecting and reporting network device status data. The status data may be collected directly from network devices or via an intermediate device, such as a status data server, that collects the status data from network devices. The approach may include aggregating status data from several network devices so that the report data reflects status data from several network devices. The approach also includes formatting and translating data between one or more formats supported by the network devices, from which the status data was collected, and one or more formats supported by recipient devices to which the status data is reported. Status data and/or report data may be stored and report data provided to recipient devices based upon a specified time schedule.

## Description

### BACKGROUND OF THE INVENTION

### 1. Field of the Invention

The present invention relates to network devices. The invention more specifically relates to collecting and reporting status data from network devices.

### 2. Description of the Related Art

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Some types of network devices are configured to provide status information. For example, some network devices are configured to provide information about firmware versions or communications protocols supported by the network devices. Other network devices, such as multifunction peripherals (MFPs) are configured to provide status information relating to consumables, such as paper, toner and staple levels, service calls and meter readings. As used herein, the term "MFP" refers to a single device that performs several functions. Example functions include, without limitation, printing, scanning, faxing and copying.

Status data is typically reported to different recipient devices, such as manufacturer servers and various vendor servers, to be used in a variety of ways. For example, a manufacturer or vendor may use network device status data to identify network devices that need to have a firmware update. As another example, a manufacturer or vendor may use status data from MFPs to provide billing services, to arrange for re-supplying of consumables or to arrange for service calls.

One issue with collecting and reporting status data from network devices is how status data is reported to different types of recipient devices that support different data formats and/or communications protocols. It is not uncommon for a vendor enterprise resource planning (ERP) site to implement a proprietary data format or communications protocol. For example, suppose that a first vendor server supports a first data format while a second vendor server supports a second data format that is different than the first data format. A network device that reports status data directly to both the first and second vendor servers must be configured to support both the first and second data formats. Configuring each network device to support multiple data formats and communications protocols is impractical, particularly for large deployments. Furthermore, data formats and communications protocols supported by recipient devices may change over time. For example, suppose that a particular vendor decides to implement a new data format on its vendor server. All network devices that provide report data to the particular vendor's server must be updated to provide report data in the new data format. Thus, even a single change in the data format or communications protocol of a recipient device may require updating a large number of network devices. The large number of data formats and communications protocols supported by recipient devices makes this approach impractical for large deployments.

Intermediary devices are sometimes used to collect status data from multiple network devices and then report the status data to recipient devices. For example, in large corporate deployments, it is not uncommon for status data servers to collect status data from sets of network devices and then report the status data to recipient devices. Using status data servers to collect and report status data reduces the number of devices that must be configured to support the data formats and communications protocols of recipient devices, but does not adequately address the problem since many status data servers may still be required in large deployments.

In view of the forgoing, there is a need for an approach for collecting and reporting network device status data that does not suffer from limitations of the prior approaches.

### SUMMARY OF THE INVENTION

An approach is provided for collecting and reporting network device status data. The approach may include aggregating status data from several network devices so that the report data reflects status data from several network devices. The approach also includes formatting and translating data between one or more formats supported by the network devices, from which the status data was collected, and one or more formats supported by recipient devices to which the status data is reported. Status data and/or report data may be stored and report data provided to recipient devices based upon a specified time schedule.

According to one aspect of the invention, an apparatus comprises a conversion mechanism configured to process network device status data that conforms to a first format and is received by the apparatus. The conversion mechanism is also configured to generate, based upon the status data, report data that conforms to a plurality of formats supported by a plurality of recipient devices.

Status data is received that indicates the status of one or more network devices. Report data is generated based upon the status data. Generating the report data may include formatting and translating the status data from one or more formats in which the status data was provided to one or more formats supported by one or more recipient devices. The report data may be provided to recipient devices immediately when generated or may be stored and provided to the recipient devices at a later time. Report data may also be retrieved remotely by recipient devices. In this situation, recipient devices are authenticated and request report data. The requests for report data are processed and report data is provided to the recipient devices.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1A is a block diagram that depicts a network architecture for collecting and reporting network device status data in accordance with an embodiment of the invention.
FIG. 1B is a block diagram that depicts an architecture where a gateway receives status data from a status data server.
FIG. 2A is a block diagram that depicts a network architecture for collecting and reporting network device status data in accordance with another embodiment of the invention.
FIG. 2B is a block diagram that depicts an example embodiment of a gateway.
FIG. 3 is a flow diagram that depicts an approach for collecting and reporting network device status data according to an embodiment of the invention.
FIG. 4A is block diagram that depicts another example embodiment of a gateway.
FIG. 4B is a block diagram that depicts an example embodiment of a recipient device.
FIG. 5 is a flow diagram that depicts an approach for collecting and reporting network device status data according to an embodiment of the invention.
FIG. 6 is a block diagram of a computer system on which embodiments of the invention may be implemented.

### DETAILED DESCRIPTION OF PREFERRED EMBODIMENTS

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are depicted in block diagram form in order to avoid unnecessarily obscuring the present invention. Various aspects of the invention are described hereinafter in the following sections:
I. OVERVIEW
II. ARCHITECTURE
III. FUNCTIONAL OVERVIEW
IV. FORMATTING
V. SECURITY
VI. OPERATIONAL EXAMPLE
VII. REMOTE RETRIEVAL OF REPORT DATA
VIII. IMPLEMENTATION MECHANISMS

### I. OVERVIEW

An approach is provided for collecting and reporting network device status data. The status data may be collected directly from network devices or via an intermediate device, such as a status data server, that collects the status data from network devices. The approach may include aggregating status data from several network devices so that the report data reflects status data from several network devices. The approach also includes formatting and translating data between one or more formats supported by the network devices, from which the status data was collected, and one or more formats supported by recipient devices to which the status data is reported. Status data and/or report data may be stored and report data provided to recipient devices based upon a specified time schedule. The approach is applicable to any type of status data, which may vary depending upon the particular network devices involved. Examples of status data include, without limitation, firmware versions, communications protocols supported by a network device, consumables, such as paper, toner and staple levels, service calls and meter readings.

Status data is received that indicates the status of one or more network devices. Report data is generated based upon the status data. Generating the report data may include formatting and translating the status data from one or more formats in which the status data was provided to one or more formats supported by one or more recipient devices. The report data may be provided to recipient devices immediately when generated or may be stored and provided to the recipient devices at a later time. Report data may also be retrieved remotely by recipient devices. In this situation, recipient devices are authenticated and request report data. The requests for report data are processed and report data is provided to the recipient devices. The approach is applicable to any type of network devices and any type of network device status data, which may vary depending upon the particular network devices involved. For example, the approach is applicable to collecting and printing device status data, wherein each of the printing devices is configured to process print data and generate printed copies of electronic documents. Examples of status data include, without limitation, firmware versions, communications protocols supported by a network device, consumables, such as paper, toner and staple levels, service calls and meter readings.

### II. ARCHITECTURE

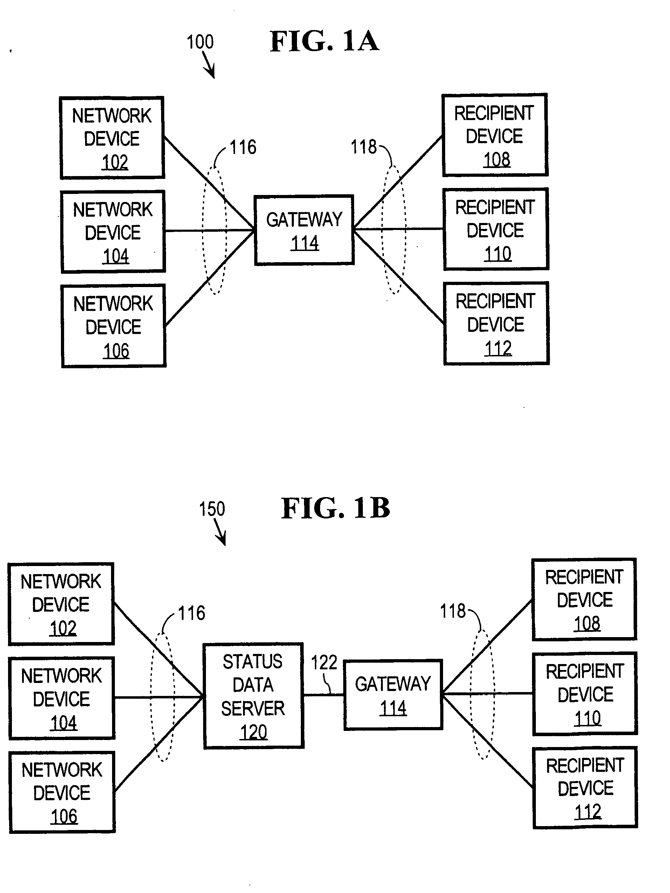

FIG. 1A is a block diagram that depicts a network architecture 100 for collecting and reporting network device status data in accordance with an embodiment of the invention. Architecture 100 includes a group of network devices 102, 104, 106, a group of recipient devices 108, 110, 112, a gateway 114 and links 116, 118. Network devices 102, 104, 106 may be any type of network device to which status data may apply. Examples of network devices 102, 104, 106 include without limitation, copiers, printers, facsimile machines, scanners, multi-function peripherals, computers, workstations, client devices, servers and routers. Recipient devices 108, 110, 112 may be any type of network device for receiving network device status data. Examples of recipient devices 108, 110, 112 include without limitation, computers, workstations and servers.

Links 116, 118 may be implemented using any medium or mechanism for exchanging data between network devices 102, 104, 106, gateway 114 and recipient devices 108, 110, 112. Examples of links 116, 118 include, without limitation, one or more wired or wireless local area networks (LANs), wide area networks (WANs), the Internet, one or more wired or wireless connections, or any combination thereof.

Gateway 114 may be implemented using any mechanism, apparatus or process for performing the functions described herein. Gateway 114 may be implemented using hardware, software, or any combination of hardware and software. Gateway 114 does not necessarily have to perform functionality performed by conventional gateways and any type of intermediary device or mechanism may be used. Although embodiments of the invention are depicted in the figures and described herein in the context of a single gateway 114, multiple gateways may be used to perform the functions described herein. For example, multiple gateways and a load balancing mechanism may be used to provide additional processing capabilities.

### III. FUNCTIONAL OVERVIEW

Gateway 114 is configured generally to process status data from network devices 102, 104, 106 and generate and provide report data to recipient devices 108, 110, 112. Gateway 114 may obtain status data directly from network devices 102, 104, 106. Gateway 114 may query network devices 102, 104, 106 for status data or network devices 102, 104, 106 may provide status data to gateway 114 on their own. Gateway 114 may receive status data from network devices 102, 104, 106 asynchronously or according to a specified schedule. According to one embodiment of the invention, gateway 114 collects status data from network devices 102, 104, 106 using the simple network management protocol (SNMP). The invention, however, is not limited to using SNMP for this purpose, and any communications protocol may be used.

Instead of receiving status data directly from network devices 102, 104, 106, gateway 114 may receive status data from an intermediate entity. FIG. 1B is a block diagram that depicts an architecture 150 where gateway 114 receives status data from a status data server 120. Status data server 120 is an apparatus, mechanism or process configured to collect status data from network devices 102, 104, 106. Status data server 120 may use any communications protocol to communicate with network devices 102, 104,106, depending upon the requirements of a particular application. For example, status data server 120 may use SNMP or any other suitable communications protocol to communicate with network devices 102, 104, 106. In this arrangement, gateway 114 generates report data based upon status data received from status data server 120. Network devices 102, 104, 106 may provide status data to status data server 120 asynchronously or according to specified times. Alternatively, status data server 120 may query status data from network devices 102, 104, 106.

Although gateway 114 is depicted and described as receiving status data from a single status data server 120, this is done for explanation purposes only, and gateway 114 may receive status data from any number of status data servers 120. For example, gateway 114 may receive status data from different status data servers 120 located at different corporate locations. Alternatively, each corporate location may have its own gateway.

Gateway 114 may provide report data to recipient devices 108, 110, 112 asynchronously or according to a specified schedule. The report data may be generated based upon status data from any number of network devices. For example, gateway 114 may generate report data that reflects status data from one or more of network devices 102, 104, 106. Thus, gateway 114 may aggregate status data from multiple network devices 102, 104, 106. Gateway 114 may also be configured to process requests for status data from recipient devices 108, 110, 112 as described in more detail hereinafter.

According to one embodiment of the invention, network device status data includes identification data that identifies an intended recipient of the network device status data. The identification data is used to route the network device status data to a particular recipient device. For example, suppose that gateway 114 receives particular network device status data from status data server 120 that contains identification data identifying recipient device 110 as the intended recipient. As part of its processing, gateway 114 parses the particular status data to retrieve the identification data. For example, gateway 114 may parse extensible markup language (XML) data to locate an XML tag for identification data. Gateway 114 examines the identification data associated with the XML tag to determine that recipient device 110 is the intended recipient of the report data and provides the report data to recipient device 110.

According to another embodiment of the invention, gateway 114 is configured to check for a confirmation receipt from a recipient device and if a confirmation receipt is not received, to generate and provide a notification of the condition. For example, suppose that gateway 114 provides report data to recipient device 112. If, after a specified time, gateway 114 has not received confirmation that the report data was received by recipient device 112, then gateway 114 generates and sends a notification, for example, to administrative personnel.

Gateway 114 may also be configured with local storage for storing status data received from network devices 102, 104, 106 or from status data server 120. The local storage may also be used to store report data generated by gateway 114. This allows gateway 114 to store status data and then generate report data at a later time. Alternatively, gateway 114 can generate and store the report data and then deliver the report data to recipient devices 108, 110, 112 at a later time. It also allows recipient device 108, 110, 112 to remotely retrieve report data at a later time, as described in more detail hereinafter.

### IV. FORMATTING

The format of status data supported by network devices 102, 104, 106 or status data server 120, depending upon how gateway 114 receives the status data, may be different than the format of report data that is provided to recipient devices 108, 110, 112. According to one embodiment of the invention, gateway 114 is configured to provide a wide variety of data formatting. For example, referring to FIG. 1A, suppose that gateway 114 receives status data from network device 102 in XML format. Suppose further that recipient device 108 supports data in XML format, but uses a different XML schema than network device 102. In this situation, gateway 114 is configured to process the XML status data received from network device 102 that conforms to the XML schema supported by network device 102 and generate XML report data that conforms to the XML schema supported by recipient device 108. As another example, gateway 114 may process the XML status data received from network device 102 and generate report data that conforms to a non-XML format supported by recipient device 108. Gateway 114 may provide report data in different formats to different recipients. For example, gateway 114 may generate first report data that conforms to a first format supported by recipient device 108 and also generate second report data that conforms to a second format supported by recipient device 110, where the first and second formats are different.

### V. SECURITY

Gateway 114 may also be configured to provide security in situations where security is desired. Network devices 102, 104, 106 and status data server 120 may be configured to provide status data to gateway 114 using secure communications or a secure communications protocol. According to one embodiment of the invention, gateway 114 is configured to process report data from network devices 102, 104, 106 and status data server 120 that conforms to a particular security format or protocol. For example, suppose that status data server 120 is configured to encrypt status data sent to gateway 114 over link 122. In this situation, gateway 114 is configured to decrypt the status data received from status data server 120 to recover the original status data and then generate report data based upon the original status data. As another example, gateway 114 may be configured to support a secure Internet protocol, such as HTTPS, or one or more virtual private networks (VPNs).

Gateway 114 may also be configured to provide report data in a secure manner to recipient devices 108, 110, 112. This may include, for example, encrypting report data to be sent to recipient devices 108, 110, 112 and/or using a secure communications protocol, such as HTTPS or a VPN.

### VI. OPERATIONAL EXAMPLE

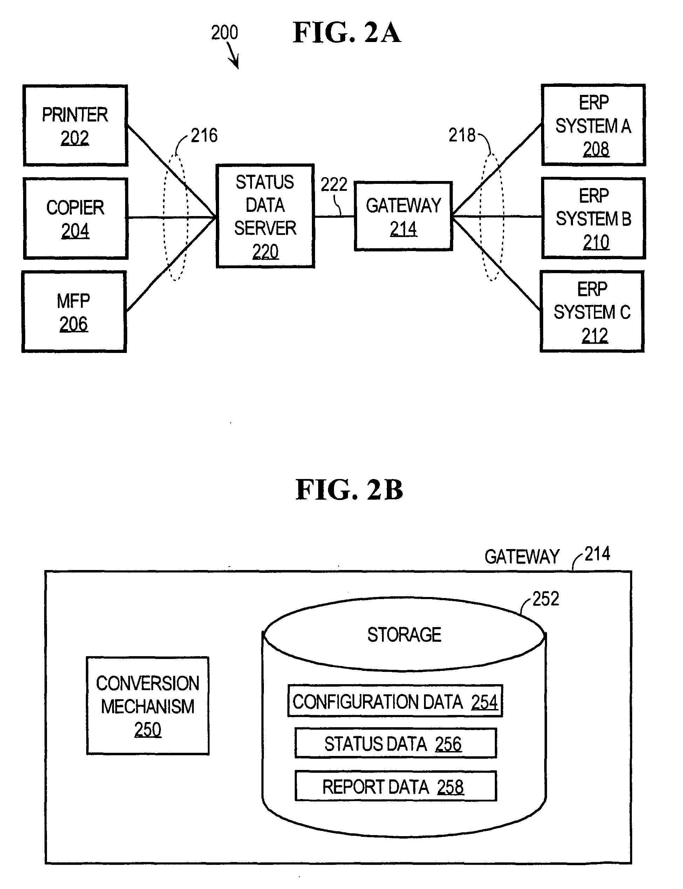

FIG. 2A is a block diagram that depicts an arrangement 200 for collecting and reporting network device status data in accordance with an embodiment of the invention. Arrangement 200 includes a printer 202, a copier 204, an MFP 206, an ERP System A 208, an ERP System B 210, an ERP System C 212, a gateway 214, a status data server 220 and links 216, 218, 222. ERP System A 208, ERP System B 210 and ERP System C 212 may be implemented at manufacturer or dealer sites. Although gateway 214 is depicted and described as receiving status data from a single status data server 220, this is done for explanation purposes only, and gateway 214 may receive status data from any number of status data servers 220. For example, gateway 214 may receive status data from different status data servers 220 located at different corporate locations. Alternatively, each corporate location may have its own gateway.

FIG. 2B is a block diagram that depicts an example embodiment of gateway 214. As depicted in FIG. 2B, gateway 214 includes a conversion mechanism 250 and a storage 252. Storage 252 may be implemented by any type of storage, such as a volatile memory, e.g., random Access Memory (RAM), or non-volatile storage, such as one or more disks. Gateway 214 may include other modules and elements, depending upon the requirements of a particular application, and FIG. 2B is not meant to depict all of the modules or elements that may be included in gateway 214. Conversion mechanism 250 is configured to process status data received from status data server 220 and generate report data to be provided to ERP System A 208, ERP System B 210 and ERP System C 212. As described herein, this may include parsing and converting the format of status data received from status data server 220 from a format supported by status data server 220 into a format supported by ERP System A 208, ERP System B 210 and ERP System C 212. Gateway 214 may also be configured to decrypt status data received from status data server 220 and encrypt report data to be provided to ERP System A 208, ERP System B 210 and ERP System C 212. Conversion mechanism 250 may be implemented in hardware, software, or any combination of hardware and software, depending upon a particular implementation. For example, conversion mechanism 250 may be implemented as one or more multi-threaded processes executing on any number of computing architectures to increase the amount of status data that can be processed simultaneously. Gateway 214 may also be configured to support queuing of messages received from status data server 220. This allows conversion mechanism 250 to process messages asynchronously, based upon the availability of processing resources.

In the present example, gateway 214 includes configuration data 254 stored on storage 252 that specifies information used by conversion mechanism 250 to perform its functions. For example, configuration data 254 may include data that specifies data formats supported by status data server 220 and ERP System A 208, ERP System B 210 and ERP System C 212. Configuration data 254 may also specify how status data 256 is converted from one format to another format. For example, configuration data 254 may specify that a particular transform is used to convert data from a first data format supported by status data server 220 to a second data format supported by ERP System A 208. When a change is made to a data format or communications protocol supported by status data server 220 or ERP System A 208, ERP System B 210 and ERP System C 212, configuration data 254 is updated to reflect the change. This reduces the number of devices that need to be updated when formatting or communications protocol changes are made. Storage 252 may also include status data 256 received from status data server 220 or other sources, as well as report data 258 generated by conversion mechanism 250. This allows report data 258 to be generated from status data 256 at any time and then delivered to a recipient device, such as ERP System A 208, at a later time.

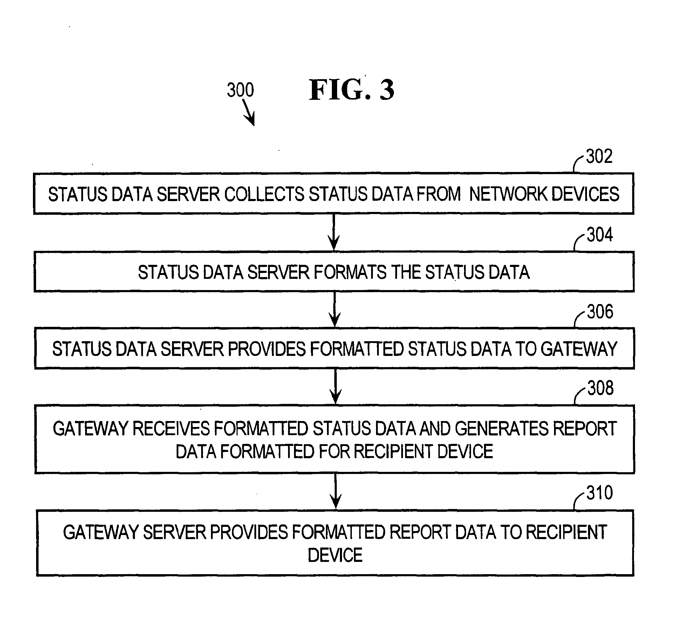

FIG. 3 is a flow diagram 300 that depicts an approach for collecting and reporting network device status data according to an embodiment of the invention. In step 302, status data server 220 collects status data from printer 202, copier 204 and MFP 206. Status data server 220 may collect status data from printer 202, copier 204 and MFP 206 according to a specified schedule or at random times. Furthermore, status data server 220 may collect status data from printer 202, copier 204 and MFP 206 at the same time or at different times, depending upon the requirements of a particular application. Status data server 220 may collect status data from printer 202, copier 204 and MFP 206 using any type of communications protocol.

In step 304, status data server 220 formats the status data collected from printer 302, copier 304 and MFP 206. For example, status data server 220 may format the status data using XML, comma separated values (CSV), or any other suitable format, depending upon the requirements of a particular application. Status data server 220 may also encrypt the formatted status data, for example, using a proprietary algorithm or a public key associated with status data server 220.

In step 306, status data server 220 provides the formatted (and possibly encrypted) status data 256 to gateway 214 over link 222. Status data server 220 may provide the formatted status data 256 to gateway 214 using a variety of techniques, depending upon the requirements of a particular application. For example, status data server 220 may provide the formatted status data 256 to gateway 214 in a message, in an email, or as an email attachment. If the status data is formatted using XML, then the status data may be provided to gateway 214 as an email attachment. Status data server 220 may use any type of communications protocol to communicate the status data 256 to gateway 214 over link 222. SMTP, HTTP, HTTPS and FTP are all example communications protocols that status data server 220 may use for this purpose.

In step 308, gateway 214 receives the status data 256 from status data server 220 and may store the status data 256 on storage 252. Gateway processes the status data 256 and generates report data 258 that conforms to the format required by the recipient device, e.g., ERP System A 208, ERP System B 210 and ERP System C 212. For example, suppose that gateway 214 receives status data 256 from status data server 220 in the form of an email with an encrypted XML attachment that contains status data that specifies a meter reading for MFP 206. Suppose further that this status data is to be reported to ERP System A 208 that supports a comma separated data file format. Gateway 214 stores the received status data 256 on storage 252. Gateway 214 decrypts the XML attachment to recover original XML data. Gateway 214 then processes the original XML data and generates report data 258 in the form of a comma separate data file based upon the XML data contained in the attachment. Gateway 214 may also encrypt the comma separated file if required by ERP System A 208. Gateway 214 may store the report data 258 on storage 252.

In step 310, gateway 214 provides the formatted report data 258 to the recipient device. In the present example, gateway 214 provides the comma separated file to ERP System A 208 over link 218.

### VII. REMOTE RETRIEVAL OF REPORT DATA

Embodiments of the invention have been described herein in the context of a gateway providing report data to recipient devices. Report data may also be remotely retrieved by recipient devices. According to this approach generally, a gateway stores status data. The gateway authenticates a recipient device. The recipient device generates and provides a request for report data to the gateway. In response to receiving the request for report data from the recipient device, the gateway generates report data and provides the report data to the recipient device.

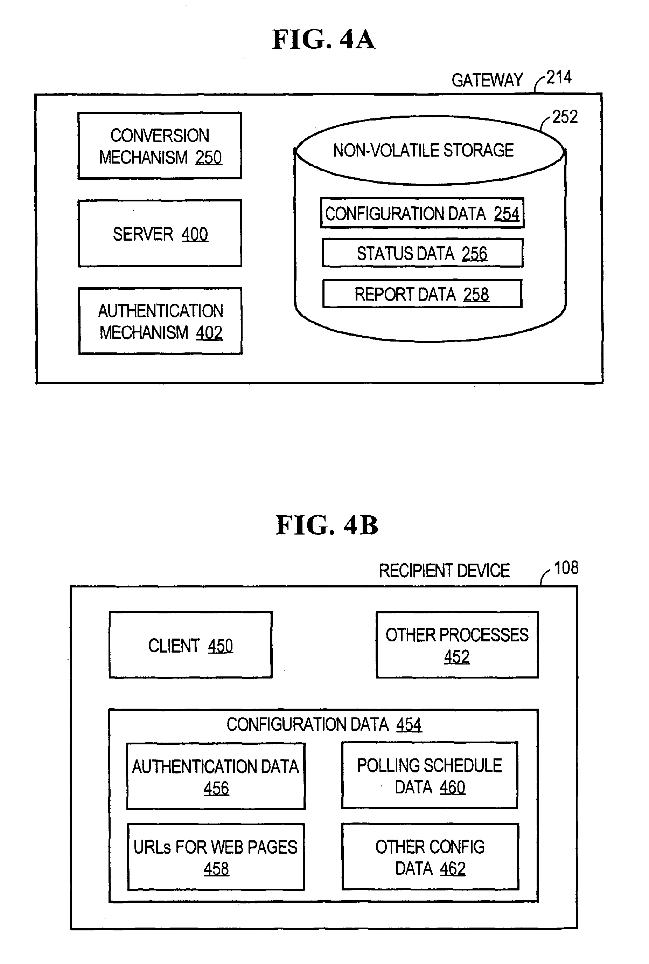

FIG. 4A is a block diagram that depicts an example embodiment of gateway 214 configured to support remote retrieval of report data. In this example, gateway 214 includes a server 400 and an authentication mechanism 402. Server 400 may be implemented by any mechanism that is configured to provide data in response to a request. One example of server 400 is a Web server, such as an Apache Web server. Authentication mechanism 402 is any mechanism configured to authenticate a recipient device. As with gateway 114, gateway 214 may also be configured to provide report data in a secure manner to recipient devices, such as ERP System A 208, ERP System B 210 and ERP System C 212. This may include, for example, encrypting report data to be sent to recipient devices and/or using a secure communications protocol, such as HTTPS or a VPN.

FIG. 4B is a block diagram that depicts an example embodiment of recipient device 108 configured to support remote retrieval of report data. In this example, recipient device 108 is configured with a client 450, other processes 452 and configuration data 454. Recipient device 108 may be configured with other mechanisms, processes and data, depending upon a particular implementation, that are not depicted or described herein for purposes of explanation only. Client 450 is a mechanism configured to generate requests for report data. Examples of client 450 include, without limitation, an application program and a Web browser. Other processes 452 may include a wide variety of processes, depending upon a particular implementation of recipient device 108. One example of other processes 452 is a process for managing and processing report data provided to recipient device 108. Configuration data 454 may include a wide variety of configuration data, depending upon a particular implementation. In the present example, configuration data 454 includes authentication data 456, Uniform Resource Locators (URLs) for Web pages 458, polling schedule data 460 and other configuration (CONFIG) data 462. Authentication data 456 is used in the process of authenticating recipient device 108. URLs for Web pages 458 and polling schedule data 460 are used for requesting report data, as described in more detail hereinafter. Other configuration data 462 includes any other type of configuration data used with recipient device 108.

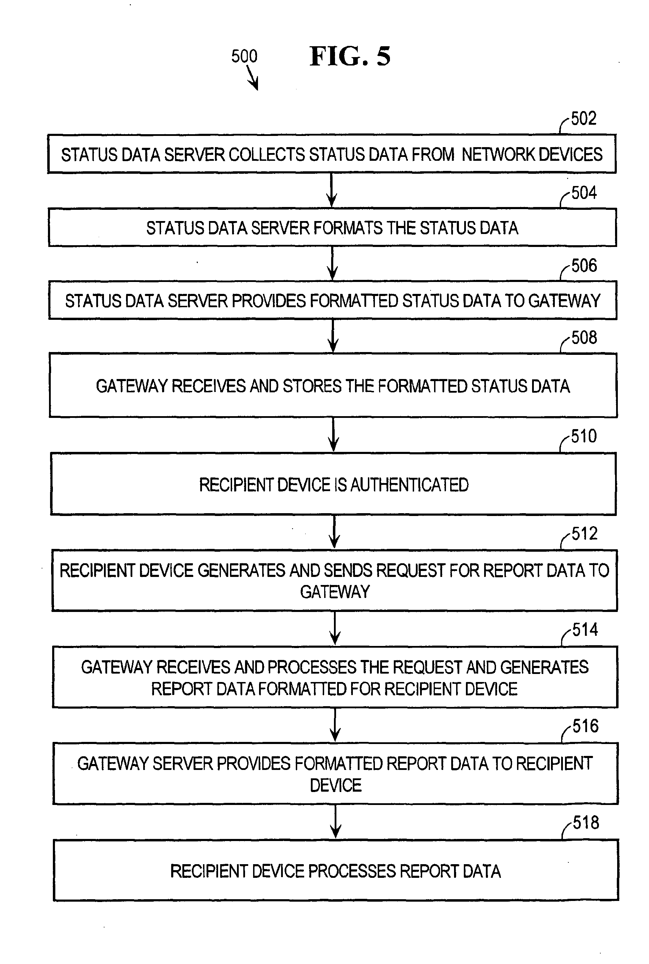

FIG. 5 is a flow diagram 500 that depicts an approach for remotely retrieving report data according to an embodiment of the invention. In step 502, status data server 220 collects status data from network devices, such as printer 202, copier 204 and MFP 206. Status data server 220 may collect status data from printer 202, copier 204 and MFP 206 according to a specified schedule or at random times. Furthermore, status data server 220 may collect status data from printer 202, copier 204 and MFP 206 at the same time or at different times, depending upon the requirements of a particular application. Status data server 220 may collect status data from printer 202, copier 204 and MFP 206 using any type of communications protocol.

In step 504, status data server 220 formats the status data collected from printer 202, copier 204 and MFP 206. For example, status data server 220 may format the status data using XML, comma separated values (CSV), or any other suitable format, depending upon the requirements of a particular application. Status data server 220 may also encrypt the formatted status data, for example, using a proprietary algorithm or a public key associated with status data server 220.

In step 506, status data server 220 provides the formatted (and possibly encrypted) status data 256 to gateway 214 over link 222. Status data server 220 may provide the formatted status data 256 to gateway 214 using a variety of techniques, depending upon the requirements of a particular application. For example, status data server 220 may provide the formatted status data 256 to gateway 214 in a message, in an email, or as an email attachment. If the status data is formatted using XML, then the status data may be provided to gateway 214 as an email attachment. Status data server 220 may use any type of communications protocol to communicate the status data 256 to gateway 214 over link 222. SMTP, HTTP, HTTPS and FTP are all example communications protocols that status data server may use for this purpose.

In step 508, gateway 214 receives the status data 256 from status data server 220 and stores the status data 256 on storage 252. The status data 256 may be stored in the format in which it was received by gateway 214, or it may be converted and stored in a different format, depending upon a particular implementation. For example, status data 256 may be converted to and stored in a common format. All status data 256 may be stored on non-volatile storage 252 together, together in association with a particular recipient device, or separately. For example, in situations where status data 256 contains identification data that indicates that the particular status data 256 is associated with a particular recipient device, then the identification data may be used to create an index or lookup table. The status data 256 can be stored in a single data file or in multiple files in one or more locations. The particular status data 256 for a particular recipient device can then be identified based upon the identification data. As another example, status data 256 may be stored in queues designated for particular recipient devices. This may be useful, for example, when status data 256 is in the form of messages.

In step 510, a recipient device is authenticated. Authentication may be performed using a variety of techniques, depending upon a particular implementation, and the invention is not limited to any particular authentication approach. One technique involves using identification data and a password to authenticate a recipient device. For example, authentication mechanism 402 may authenticate recipient device 108 by verifying an identification and a password provided by recipient device 108. The identification and password may be part of authentication data 456 or stored elsewhere. As another example, a digital signature with a cryptographic hash function or a digital certificate may be used to authenticate recipient device 108. As yet another example, in situations where HTTPS is used for communications between gateway 214 and recipient devices, then the Secure Sockets Layer (SSL) or Transport Layer Security (TLS) may be used to authenticate a recipient device.

In step 512, recipient device 108 generates and sends a request for report data to gateway 214. According to one embodiment of the invention, client 450 generates the request and causes the request to be sent to server 400 on gateway 214. The structure and format of the request may vary, depending upon the requirements of a particular implementation, and the approach is not limited to requests of any particular structure or format. For example, a proprietary request structure and format may be used. The proprietary request structure and format may be determined and configured by administrative personnel. The proprietary request structure and format may be negotiated between gateway 214 and recipient devices. Alternatively, a public request structure and format may be used. For example, an HTTP GET request may be used to request report data. In this situation, the HTTP GET request includes a particular URL from URLs for Web pages 458. URLs for Web pages 458 may include several URLs to support multiple data formats. Client 450 selects a particular URL to be used in the HTTPS GET request based upon the desired format for the report data. For example, if the desired format of report data is HTML, then one URL is used. If the desired format of report data is XML, then a different URL is used. Different URLs may also be used to request report data that conforms to different XML schemas. A recipient device may use different URLs, depending upon the desired format of the report data. For example, if client 450 is an application program, then the report data may be requested in XML format. As another example, if client 450 is a Web browser, then the report data may be requested in HTML. This may occur, for example, when an administrator uses a Web browser to request report data from gateway 214. The format of the report data may also be dictated by subsequent processing that is to be performed on the report data. For example, suppose that report data is to be processed by a particular process from other processes 452. In this situation, the format of the report data may be requested based upon the format needed by the particular process. The request may conform to a secure communications protocol, such as an HTTPS GET request.

The determination of when recipient devices generate and send requests may be based upon a polling schedule. The polling schedule may be defined by polling schedule data 460. Polling schedule data 460 may be device-specific and configured during device manufacture and/or by administrative personnel. Some recipient devices may generate requests for status data more frequently than other recipient devices. This may occur, for example, when a particular network device from which status data is being collected is known to have reliability issues, require more frequent service, or is a network device that is heavily used or is of particular importance, and it is therefore desirable to obtain more frequent status data. Other network devices may be used infrequently or have high reliability. Status data may be collected less frequently for these network devices.

In step 514, gateway 214 receives and processes the request and generates report data formatted for the recipient device. According to one embodiment, server 400 processes the request from recipient device 108 and generates report data formatted for recipient device 108. For example, suppose that the request is in the form of an HTTPS GET request. Server 400 processes the HTTPS GET request and generates report data 258 in the form of a Web page that contains the status data 256 for recipient device 108. The particular status data 256 associated with recipient device 108 may be identified, for example, based upon identification data contained in the request that identifies recipient device 108 or by a network address, such as an IP address, of recipient device 108. The identification data or IP address is then used to locate the particular status data 256 associated with recipient device 108. Other techniques may also be used to identify the particular status data 256 associated with a particular recipient device.

The format of the report data 258 generated for the recipient device may be based upon the request received from a recipient device. For example, a request may explicitly specify a particular format for report data 258. As another example, the URL contained in the request may be used to select a particular format for report data 258. For example, configuration data 254 may include data that indicates data formats that correspond to particular URLs. Server 400 examines the URL contained in a request and performs a lookup to determine the format of the report data 258 that is to be provided to the recipient device that sent the request. The data in configuration data 254 that identifies the relationships between URLs and data formats may be specified by administrative personnel.

In step 516, gateway 214 provides the formatted report data to the recipient device. In the present example, server 400 provides the formatted report data to be provided to recipient device 108. In the situation where the request was in the form of an HTTP (or HTTPS) request, the Web page generated by server 400 is provided to recipient device 108.

In step 518, the recipient device processes the received report data. For example, suppose that recipient 108 generated and sent an HTTPS GET request to server 400 and that in response to this request, server 400 generated and provided to recipient device 108 a Web page containing report data. One or more other processes 452 may process the Web page received suppose that recipient device 108. This may include, for example, extracting report data from the Web page, processing the report data and/or providing the report data to other mechanisms or entities, located either on or separate from recipient device 108.

Although the foregoing example and other embodiments of the invention have been described in the context of gateway 214 generating report data in response to receiving a request from a recipient device, the approach is not limited to this context. Report data 258 may be generated any time after status data 256 becomes available and gateway 214 does not need to wait to receive a request from a recipient device before generating report data 258. For example, gateway 214 may, upon receiving status data 256, immediately generate store report data 258. This may include, for example, gateway generating and storing Web pages that contain report data 258. This may be performed in situations when gateway 214 knows the format of the report data 258. For example, gateway 214 may know that certain status data 256 will ultimately be provided to a particular recipient device that uses a particular format. This may be determined, for example, by identification data contained in status data 256 that identifies a particular recipient device or a format for the corresponding report data.

### VIII. IMPLEMENTATION MECHANISMS

Although embodiments of the invention have been described herein in the context of status data being processed through a gateway, the invention does not require that all network device status data be processed through a gateway. For example, in FIG. 2A, status data server 220 may, in addition to providing status data to gateway 214, provide status data directly to other recipient devices, e.g., an ERP System D (not depicted). Thus, the approach may be used in combination with network devices and intermediary devices, such as status data server 220, that provide status data directly to recipient devices.

The functionality performed by the gateways described herein may be implemented using a wide variety of approaches, depending upon the requirements of a particular application. For example, any type of hardware, software or hardware/software combination may be used. Also, any type of computing platform may be used.

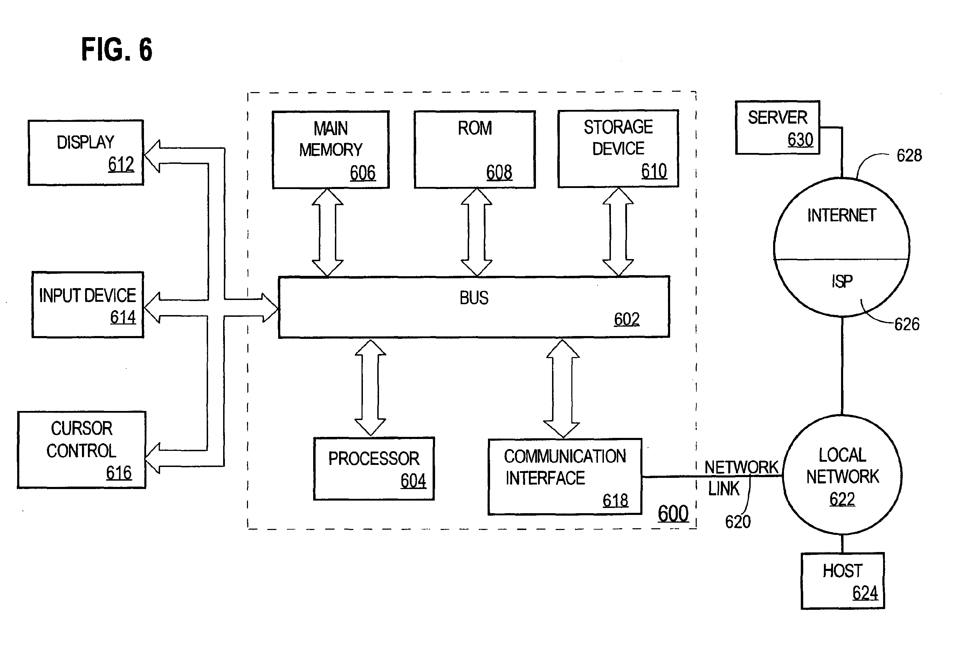

FIG. 6 is a block diagram that illustrates a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for implementing the techniques described herein. According to one embodiment of the invention, those techniques are performed by computer system 600 in response to processor 604 executing one or more sequences of one or more instructions contained in main memory 606. Such instructions may be read into main memory 606 from another machine-readable medium, such as storage device 610. Execution of the sequences of instructions contained in main memory 606 causes processor 604 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 600, various machine-readable media are involved, for example, in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio-wave and infrared data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector can receive the data carried in the infrared signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transporting the information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution. In this manner, computer system 600 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. An apparatus comprising:
a conversion mechanism configured to process network device status data that conforms to a first format and is received by the apparatus, and generate, based upon the status data, report data that conforms to a plurality of formats supported by a plurality of recipient devices.

2. The apparatus recited in Claim 1, wherein the network device status data is received by the apparatus directly from a plurality of multi-function peripherals that each perform one or more of printing, copying, faxing and scanning.

3. The apparatus recited in Claim 2, wherein the network device status data specifies one or more of consumable levels, a meter reading or need for a service call.

4. The apparatus recited in Claim 1, wherein the network device status data is received by the apparatus from a status data server that collects network device status data from a plurality of network devices.

5. The apparatus recited in Claim 1, wherein the network device status data received by the apparatus is encrypted and the apparatus is configured to decrypt the network device status data.

6. The apparatus recited in Claim 1, wherein the conversion mechanism is configured to generate the report data in either XML or CSV format.

7. The apparatus recited in Claim 1, wherein the network device status data is XML data that conforms to a first XML schema and the report data is XML data that conforms to a second XML schema.

8. The apparatus recited in Claim 1, wherein the apparatus is configured to
generate both first report data conforms to a first data format supported by a first recipient device from the plurality of recipient devices and second report data conforms to a second data format supported by a second recipient device from the plurality of recipient devices, and
provide the first report data to the first recipient device and the second report data to the second recipient device.

9. The apparatus recited in Claim 1, wherein the apparatus is configured to provide the report data to the plurality of recipient devices using one or more Internet protocols including SMTP, HTTP, HTTPS and FTP.

10. The apparatus recited in Claim 1, wherein the apparatus is configured to provide the report data to the plurality of recipient devices based upon a schedule.

11. The apparatus recited in Claim 1, wherein the apparatus is configured to provide the report data at a first time to a first recipient device from the plurality of recipient devices and to provide the report data at a second time to a second recipient device from the plurality of recipient devices, wherein the first and second times are different.

12. The apparatus recited in Claim 1, wherein the apparatus is configured to provide the report data to the plurality of recipient devices, wherein the report data provided to each of the plurality of recipient devices contains identification data that uniquely identifies the recipient device.

13. The apparatus recited in Claim 1, wherein the apparatus is configured to provide a notification if a receipt confirmation indicating receipt of the report data is not received from a particular recipient device from the plurality of recipient devices.

14. The apparatus recited in Claim 1, further comprising a storage device for storing the recipient device status data.

15. A computer-implemented method for processing printing device status data, the computer-implemented method comprising:
receiving over a network, printing device status data that reflects the status of two or more printing devices, wherein each of the two or more printing devices includes a print process configured to process print data and generate a printed version of an electronic document;
authenticating a first recipient device;
authenticating a second recipient device;
receiving a request for report data from the first recipient device;
in response to receiving the request for report data from the first recipient device,
generating, based upon the printing device status data, first report data that conforms to a first data format, and
providing the first report data to the first recipient device;
receiving a request for report data from the second recipient device; and
in response to receiving the request for report data from the second recipient device,
generating, based upon the printing device status data, second report data that conforms to a second data format that is different than the first data format, and
providing the second report data to the second recipient device.

16. The computer-implemented method as recited in Claim 15, wherein:
the printing device status data conforms to a non-XML format,
the first report data conforms to a first XML schema, and
the second report data conforms to a second XML schema.

17. The computer-implemented method as recited in Claim 15, wherein:
the printing device status data conforms to a first XML schema,
the first report data conforms to a second XML schema, and
the second report data conforms to a third XML schema.

18. The computer-implemented method as recited in Claim 15, wherein the first and second requests are received from the first and second recipient devices and the first report data and second report data are provided to the first and second recipient devices using one or more secure connections.

19. The computer-implemented method as recited in Claim 15, wherein:
the request for report data from the first recipient device includes an HTTP GET request, and
the generating, based upon the printing device status data, first report data that conforms to a first data format includes generating one or more Web pages that include the first report data in XML form.

20. The computer-implemented method as recited in Claim 15, wherein:
the request for report data from the first recipient device includes an HTTPS GET request, and
the generating, based upon the printing device status data, first report data that conforms to a first data format includes generating one or more Web pages that include the first report data in XML form.

21. The computer-implemented method as recited in Claim 15, wherein:
the request for report data from the first recipient device includes an HTTP GET request,
the generating, based upon the printing device status data, first report data that conforms to a first data format includes generating one or more Web pages that include the first report data in HTML form, and
providing the first report data to the first recipient device includes providing the first report data to a Web browser executing on the first recipient device.

22. The computer-implemented method as recited in Claim 15, wherein:
the request for report data from the first recipient device includes an HTTP GET request that specifies a first URL, and
the computer-implemented method further comprises:
receiving a second request for report data from the first recipient device, wherein the second request for report data from the first recipient device includes an HTTP GET request that specifies a second URL that is different than the first URL;
in response to receiving the second request for report data from the first recipient device,
generating, based upon the printing device status data, second report data that conforms to a third data format that is different than the first and second data formats, and
providing the second report data to the first recipient device;.

23. The computer-implemented method as recited in Claim 15, wherein:
the request for report data from the first recipient device specifies a URL, and
the computer-implemented method further comprises determining the first data format based upon the URL.

24. A computer-readable medium for processing printing device status data, the computer-readable medium carrying instructions which, when processed by one or more processors, cause:
receiving over a network, printing device status data that reflects the status of two or more printing devices, wherein each of the two or more printing devices includes a print process configured to process print data and generate a printed version of an electronic document;
authenticating a first recipient device;
authenticating a second recipient device;
receiving a request for report data from the first recipient device;
in response to receiving the request for report data from the first recipient device,
generating, based upon the printing device status data, first report data that conforms to a first data format, and
providing the first report data to the first recipient device;
receiving a request for report data from the second recipient device; and
in response to receiving the request for report data from the second recipient device,
generating, based upon the printing device status data, second report data that conforms to a second data format that is different than the first data format, and
providing the second report data to the second recipient device.

25. The computer-readable medium as recited in Claim 24, wherein:
the printing device status data conforms to a non-XML format,
the first report data conforms to a first XML schema, and
the second report data conforms to a second XML schema.

26. The computer-readable medium as recited in Claim 24, wherein:
the printing device status data conforms to a first XML schema,
the first report data conforms to a second XML schema, and
the second report data conforms to a third XML schema.

27. The computer-readable medium as recited in Claim 24, wherein the first and second requests are received from the first and second recipient devices and the first report data and second report data are provided to the first and second recipient devices using one or more secure connections.

28. The computer-readable medium as recited in Claim 24, wherein:
the request for report data from the first recipient device includes an HTTP GET request, and
the generating, based upon the printing device status data, first report data that conforms to a first data format includes generating one or more Web pages that include the first report data in XML form.

29. The computer-readable medium as recited in Claim 24, wherein:
the request for report data from the first recipient device includes an HTTPS GET request, and
the generating, based upon the printing device status data, first report data that conforms to a first data format includes generating one or more Web pages that include the first report data in XML form.

30. The computer-readable medium as recited in Claim 24, wherein:
the request for report data from the first recipient device includes an HTTP GET request,
the generating, based upon the printing device status data, first report data that conforms to a first data format includes generating one or more Web pages that include the first report data in HTML form, and
providing the first report data to the first recipient device includes providing the first report data to a Web browser executing on the first recipient device.

31. The computer-readable medium as recited in Claim 24, wherein:
the request for report data from the first recipient device includes an HTTP GET request that specifies a first URL, and
the computer-readable medium further comprises additional instructions which, when processed by one or more processors, causes:
receiving a second request for report data from the first recipient device, wherein the second request for report data from the first recipient device includes an HTTP GET request that specifies a second URL that is different than the first URL;
in response to receiving the second request for report data from the first recipient device,
generating, based upon the printing device status data, second report data that conforms to a third data format that is different than the first and second data formats, and
providing the second report data to the first recipient device.

32. The computer-readable medium as recited in Claim 24, wherein:
the request for report data from the first recipient device specifies a URL, and
the computer-readable medium further comprises additional instructions which, when processed by one or more processors, causes determining the first data format based upon the URL.

33. An apparatus for processing printing device status data, the apparatus being configured to:
receive over a network, printing device status data that reflects the status of two or more printing devices, wherein each of the two or more printing devices includes a print process configured to process print data and generate a printed version of an electronic document;
authenticate a first recipient device;
authenticate a second recipient device; receive a request for report data from the first recipient device;
in response to receiving the request for report data from the first recipient device,
generate, based upon the printing device status data, first report data that conforms to a first data format, and
provide the first report data to the first recipient device;
receive a request for report data from the second recipient device; and
in response to receiving the request for report data from the second recipient device,
generate, based upon the printing device status data, second report data that conforms to a second data format that is different than the first data format, and
provide the second report data to the second recipient device.

34. The apparatus as recited in Claim 33, wherein:
the printing device status data conforms to a non-XML format,
the first report data conforms to a first XML schema, and
the second report data conforms to a second XML schema.

35. The apparatus as recited in Claim 33, wherein:
the printing device status data conforms to a first XML schema,
the first report data conforms to a second XML schema, and
the second report data conforms to a third XML schema.

36. The apparatus as recited in Claim 33, wherein the first and second requests are received from the first and second recipient devices and the first report data and second report data are provided to the first and second recipient devices using one or more secure connections.

37. The apparatus as recited in Claim 33, wherein:
the request for report data from the first recipient device includes an HTTP GET request, and
the generating, based upon the printing device status data, first report data that conforms to a first data format includes generating one or more Web pages that include the first report data in XML form.

38. The apparatus as recited in Claim 33, wherein:
the request for report data from the first recipient device includes an HTTPS GET request, and
the generating, based upon the printing device status data, first report data that conforms to a first data format includes generating one or more Web pages that include the first report data in XML form.

39. The apparatus as recited in Claim 33, wherein:
the request for report data from the first recipient device includes an HTTP GET request,
the generating, based upon the printing device status data, first report data that conforms to a first data format includes generating one or more Web pages that include the first report data in HTML form, and
providing the first report data to the first recipient device includes providing the first report data to a Web browser executing on the first recipient device.

40. The apparatus as recited in Claim 33, wherein:
the request for report data from the first recipient device includes an HTTP GET request that specifies a first URL, and
the apparatus is further configured to:
receive a second request for report data from the first recipient device, wherein the second request for report data from the first recipient device includes an HTTP GET request that specifies a second URL that is different than the first URL;
in response to receiving the second request for report data from the first recipient device,
generate, based upon the printing device status data, second report data that conforms to a third data format that is different than the first and second data formats, and
provide the second report data to the first recipient device.

41. The apparatus as recited in Claim 33, wherein:
the request for report data from the first recipient device specifies a URL, and the apparatus is further configured to determine the first data format based upon the URL.
